# EUROPÄISCHE PATENTSCHRIFT

(11) **EP 1 802 504 B1**
(45) Veröffentlichungstag und Bekanntmachung des Hinweises auf die Patenterteilung: **16.12.2009**
(21) Anmeldenummer: 05801638.7
(22) Anmeldetag: 13.10.2005
(51) Int. Cl.: B60T 8/40, B60T 7/04

(54) **BREMSANLAGE FÜR KRAFTFAHRZEUGE**
BRAKE SYSTEM FOR MOTOR VEHICLES
SYSTEME DE FREINAGE POUR VEHICULE A MOTEUR

(30) Priorität: 15.10.2004 DE 102004050113; 19.04.2005 DE 102005017958
(43) Veröffentlichungstag der Anmeldung: 04.07.2007
(73) Patentinhaber: Continental Teves AG & Co. oHG, 60488 Frankfurt am Main (DE)
(72) Erfinder: DRUMM, Stefan, 55291 Saulheim (DE); SCHIEL, Lothar, 65719 Hofheim (DE)
(86) Internationale Anmeldenummer: PCT/EP2005/055245
(87) Internationale Veröffentlichungsnummer: WO 2006/042823

(56) Entgegenhaltungen:
- EP-A- 1 078 833
- DE-A1-102004 025 638

## Beschreibung

Die Erfindung betrifft eine Bremsanlage für Kraftfahrzeuge mit einem Hauptzylinder, an den Radbremszylinder anschließbar sind, einem ersten Kolben, der über eine Betätigungskräfte übertragende Druckstange mit einem Bremspedal gekoppelt ist, einem zweiten Kolben, der den Hauptzylinder betätigt, einem dritten Kolben, der vom ersten Kolben betätigbar ist, und der in eine kraftübertragende Verbindung mit dem zweiten Kolben bringbar ist, mit mindestens einem elastischen Element, das einen Pedalwegsimulator bildet, der in der Betriebsart "brake-by-wire" dem Fahrzeugführer ein angenehmes Pedalgefühl vermittelt, mit Mitteln zum Koppeln der Bewegungen des ersten und des dritten Kolbens, die in Abhängigkeit vom Verfahrweg des dritten Kolbens in einem Gehäuse aktiviert werden, mit einem mit hydraulischem Druck beaufschlagbaren Zwischenraum zwischen dem zweiten und dem dritten Kolben, wobei eine Druckbeaufschlagung des Zwischenraums den zweiten und den dritten Kolben in entgegengesetzter Richtung belastet, sowie mit einem elektrisch steuerbaren Druckbereitstellungsmodul, das sowohl ein Befüllen des Zwischenraums mit Druckmittel als auch dessen Entleeren ermöglicht und mit einer elektronischen Steuereinheit, die der Ansteuerung des Druckbereitstellungsmoduls dient.

In der Kraftfahrzeugtechnik finden "brake-by-wire"-Bremssysteme eine immer größere Verbreitung. Bei diesen Bremssystemen kann die Bremse auch ohne aktives Zutun des Fahrers aufgrund elektronischer Signale "fremd-" betätigt werden. Diese elektronischen Signale können beispielsweise von einem elektronischen Stabilitätsprogramm ESP oder einem Abstandsregelsystem ACC ausgegeben werden. Kommt es zu einer Überlagerung einer derartigen Fremdbetätigung mit einer Fahrerbetätigung, so spürt der Fahrer des Kraftfahrzeugs eine Rückwirkung im Bremspedal. Dieser Rückwirkungseffekt auf das Bremspedal kann für den Fahrer überraschend und unangenehm sein, so dass der Fahrer in einer kritischen Situation des Straßenverkehrs das Bremspedal nicht in einem dieser Situation angepassten Maße betätigt, da er durch die von der Fremdbetätigung der Bremse verursachte Rückwirkung auf das Bremspedal irritiert wird.

Aus der EP 1 078 833 A2 ist eine derartige Bremsanlage bekannt. Bei der vorbekannten Bremsanlage ist vorgesehen, dass der zweite und der dritte Kolben durch einen Zwischenraum voneinander getrennt sind, so dass der dritte Kolben durch den den zweiten Kolben beaufschlagenden Druck in der der Beaufschlagungsrichtung des zweiten Kolbens entgegengesetzten Richtung beaufschlagt wird.

Eine weitere Bremsanlage ist aus der zwischen Prioritäts - und Anmeldetag veröffentlichten Schrift DE 10 2004 025 638 A1 bekannt. Eine "Fremdbetätigung" der vorbekannten Bremsanlage bzw. eine Druckbeaufschlagung des Zwischenraums erfolgt in der Betriebsart "brake-by-wire" durch das elektrisch steuerbare Druckbereitstellungsmodul mittels einer ebenfalls elektrisch ansteuerbaren Ventileinrichtung, die eine hydraulische.Verbindung zwischen dem Zwischenraum und dem Druckbereitstellungsmodul freigibt bzw. absperrt. Als nachteilig wird bei der vorbekannten Bremsanlage die Tatsache empfunden, dass eine Unterstützung der vom Fahrzeugführer aufgebrachten Betätigungskraft nur bei intakter Elektronik und der im Fahrzeug vorhandenen Energieversorgung (Batterie) möglich ist.

Es ist daher Aufgabe der vorliegenden Erfindung, eine Bremsanlage der eingangs genannten Gattung vorzuschlagen, bei der eine Unterstützung der Betätigungskraft auch bei einem Ausfall der Steuerelektronik oder der elektrischen Energieversorgung möglich ist.

Diese Aufgabe wird erfindungsgemäß dadurch gelöst, dass zwischen dem ersten und dem dritten Kolben ein vierter Kolben angeordnet ist, der im Zusammenspiel mit dem dritten Kolben eine hydraulische Kammer begrenzt, die eine, durch eine Bremspedalbetätigung sperrbare, hydraulische Verbindung zu einem Druckmittelvorratsbehälter aufweist und in der durch die Betätigungskräfte Druck aufgebaut werden kann, und dass durch den in der Kammer eingesteuerten hydraulischen Druck eine Ventilanordnung ansteuerbar ist, mit der der im Zwischenraum eingesteuerte Druck veränderbar ist. Die Ventilanordnung kann vorzugsweise im Druckbereitstellungsmodul integriert sein.

Bei einer vorteilhaften Weiterbildung der Erfindung ist das den Pedalsimulator bildende elastische Element wirkungsmäßig zwischen der Druckstange und dem vierten Kolben angeordnet. In der dargestellten Ausgestaltung besteht das elastische Element aus einer Elastomerfeder aus komprimierbarem Material und einer Druckfeder aus annähernd inkompressibelelastischem Material, wobei letztere in einem hydraulischen Raum angeordnet ist.

Bei einer anderen Ausgestaltung des Erfindungsgegenstandes ist eine hydraulische Absperrvorrichtung zum Koppeln der Bewegungen des ersten und des dritten Kolbens vorgesehen, die in Abhängigkeit vom Verfahrweg des dritten Kolbens im Gehäuse aktiviert wird. Dabei wird die Absperrvorrichtung durch eine absperrbare hydraulische Verbindung gebildet, die im unaktivierten Zustand der Absperrvorrichtung eine Verbindung eines Simulatorraums mit einem Druckmittelvorratsbehälter zulässt, welche durch das Zurücklegen eines Verfahreweges des dritten Kolbens im Gehäuse abgesperrt wird.

Bei einer vorteilhaften Weiterbildung des Erfindungsgegenstandes ist die Kammer bei unbetätigtem Pedal hydraulisch mit der Absperrvorrichtung bzw. dem Druckmittelvorratsbehälter verbunden, wobei diese Verbindung durch eine Relativbewegung des vierten Kolbens gegenüber dem dritten Kolben absperrbar ist. Dadurch wird erreicht, dass die Kammer bei unbetätigtem Pedal drucklos (Behälterdruck) ist und bei einer Bremspedalbetätigung ein stetig wachsender funktionaler Zusammenhang zwischen der Bremspedalbetätigungskraft und dem Kammerdruck besteht.

Die hydraulische Verbindung wird beispielsweise durch eine in der Stirnwand des vierten Kolbens ausgebildete Öffnung gebildet, die mit einem am dritten Kolben angeordneten Dichtelement zusammenwirkt. In einer anderen Ausgestaltung ist zur Realisierung der durch eine Relativbewegung des vierten Kolbens gegenüber dem dritten Kolben absperrbaren hydraulischen Verbindung ein vorzugsweise im vierten Kolben ausgebildeter Strömungsweg vorgesehen, der eine zwischen dem dritten und dem vierten Kolben angeordnete Dichtung überbrückt.

Die in der Absperrvorrichtung enthaltenen hydraulischen Verbindungen des Simulatorraums mit dem Druckmittelvorratsbehälter dienen vorzugsweise auch als hydraulische Drosselelemente zur hydraulischen Bedämpfung des Pedalwegsimulators. Dabei ist es besonders vorteilhaft, wenn wenigstens eines der hydraulischen Drosselelemente ein durchströmungsrichtungsabhängiges Verhalten aufweist.

In einer bevorzugten Ausführungsform ist ein Drehwinkelsensor zum Erfassen der Bremspedalposition und -bewegung vorgesehen, dessen Ausgangssignal einer elektronischen Steuereinheit zugeführt wird und der Ansteuerung des Druckbereitstellungsmoduls dient. Außerdem ist es sinnvoll, wenn ein Drucksensor zum Erfassen des vom Druckbereitstellungsmodul abgegebenen hydraulischen Druckes vorgesehen ist, dessen Ausgangssignal der elektronischen Steuereinheit zugeführt wird.

Bei einer anderen Ausführungsvariante enthält das Druckbereitstellungsmodul einen hydraulischen Hochdruckspeicher.

Eine andere vorteilhafte Weiterbildung der Erfindung besteht darin, dass das Druckbereitstellungsmodul Mittel zum Laden des Hochdruckspeichers enthält. Außerdem enthält das Druckbereitstellungsmodul vorzugsweise elektrisch steuerbare Ventile.

Bei einer anderen vorteilhaften Weiterbildung des Erfindungsgegenstandes ist die elektronische Steuereinheit dem Druckbereitstellungsmodul zugeordnet.

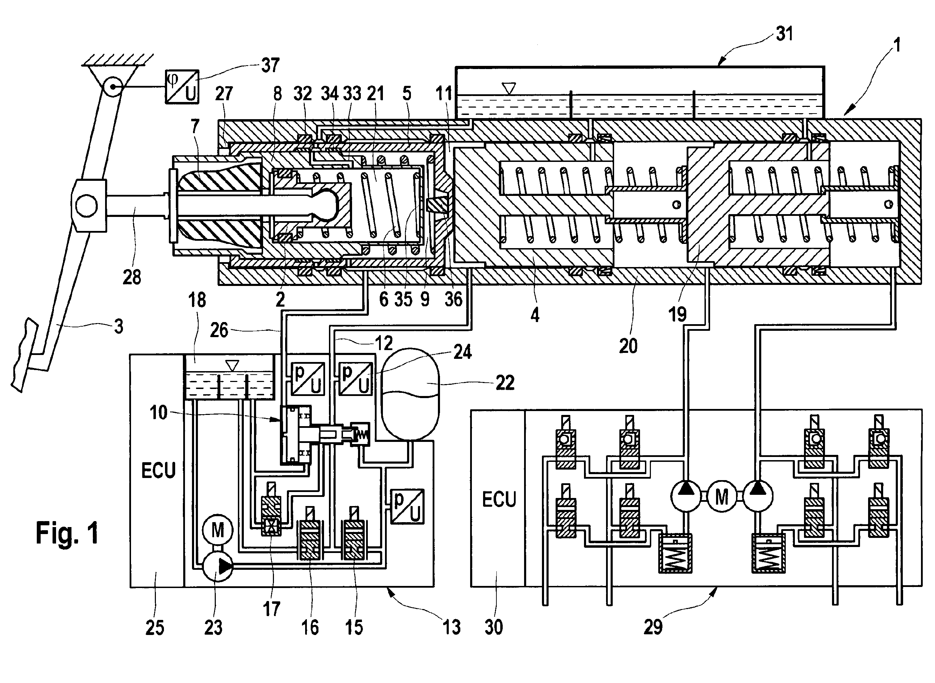

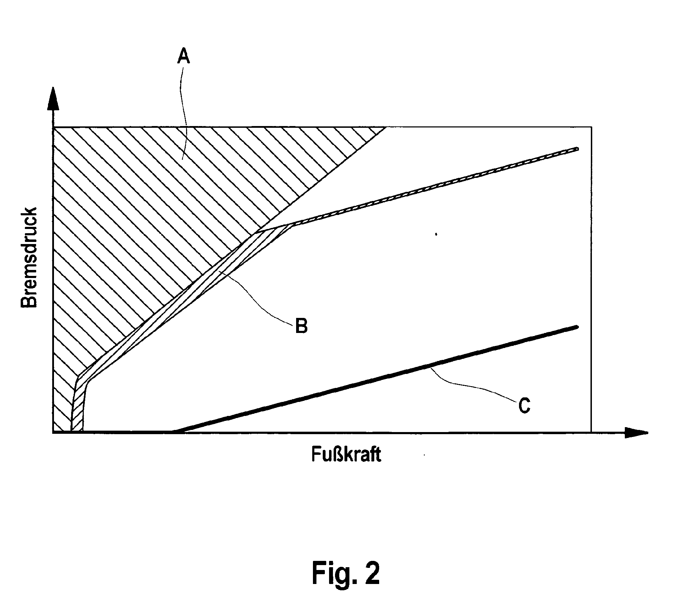

Im nachfolgenden Text wird eine Ausführungsform der Erfindung unter Bezugnahme auf die beiliegende schematische Zeichnung näher erläutert, in der Fig. 1 den Aufbau der erfindungsgemäßen Bremsanlage und Fig. 2 eine diagrammatische Darstellung von drei, bei der Bremsanlage realisierbaren Betriebsmodi zeigen.

Die in der Zeichnung dargestellte erfindungsgemäße Bremsanlage weist ein Bremspedal 3 auf, das über eine Betätigungsstange 28 mit einem ersten Kolben 2 wirkungsmäßig verbunden ist. Der Bremspedalweg kann über einen Drehwinkelsensor 37 erfasst werden. Der erste Kolben 2 ist in einem vierten Kolben 8 angeordnet, wobei zwischen dem ersten und dem vierten Kolben 8 ein Simulatorraum 21 ausgebildet ist, in dem eine Druckfeder 6 angeordnet ist, die bei unbetätigtem Pedal den ersten Kolben 2 zur Anlage am vierten Kolben 8 bringt. Der vierte Kolben 8 ist in einem dritten Kolben 5 verschiebbar geführt und begrenzt in letzterem eine hydraulische Kammer 9, die über eine Öffnung bzw. einen Durchgang 35 mit dem Simulatorraum 21 in Verbindung steht. Der Durchgang 35 wird durch eine Relativbewegung des vierten Kolbens 8 gegenüber dem dritten Kolben 5 abgesperrt, der zu diesem Zweck ein Dichtelement 36 trägt. Eine alternative Realisierung dieser Absperrung ist die Verwendung wegabhängig überströmbarer Kolbendichtungen. Ein elastisches Element 7, beispielsweise eine Elastomerfeder, ist wirkungsmäßig zwischen der Betätigungsstange 28 und dem vierten Kolben 8 angeordnet und bildet zusammen mit der Feder 6 einen Pedalwegsimulator, der dem Fahrzeugführer bei der Betätigung der Bremsanlage das gewohnte Pedalgefühl vermittelt, das einer üblichen Bremspedalcharakteristik entspricht. Dies bedeutet, dass bei geringem Bremspedalweg der Widerstand langsam ansteigt und bei größerem Bremspedalweg überproportional zunimmt. Die vorhin erwähnte Druckfeder 6 könnte ebenso gut "trocken", d.h., außerhalb des Simulatorraums 21 angeordnet werden, beispielsweise parallel zur Elastomerfeder 7.

Weiterhin ist ein zweiter Kolben 4 vorgesehen, der einen Betätigungskolben des Hauptbremszylinders 1 darstellt. Im gezeigten Beispiel ist der Hauptbremszylinder 1 als Tandemhauptzylinder ausgeführt, bei dem dem zweiten Kolben 4 ein fünfter Kolben 19 nachgeschaltet ist. An den Hauptbremszylinder 1 können über ein steuerbares Radbremsdruckmodulationsmodul 29 die Radbremsen des Fahrzeugs angeschlossen sein, wobei dem Radbremsdruckmodulationsmodul 29 eine elektronische Steuer- und Regeleinheit 30 zugeordnet ist.

Alle Kolben 2, 4, 5, 8, 19 sind in einem Gehäuse 20 untergebracht, wobei der zweite, der dritte, sowie der fünfte Kolben bei der dargestellten Ausführung gleiche Durchmesser bzw. gleiche Querschnittsflächen aufweisen. Zwischen dem dritten Kolben 5 und dem zweiten Kolben 4 befindet sich ein Zwischenraum 11, der mittels einer hydraulischen Verbindung 12 mit einem elektrohydraulischen Druckbereitstellungsmodul 13 verbunden ist, das eine Druckbeaufschlagung des Zwischenraums 11 ermöglicht. Das Druckbereitstellungsmodul 13 umfasst einen als hydraulische Druckquelle dienenden Hochdruckspeicher 22, eine motorangetriebene Pumpe 23 zum Aufladen des Hochdruckspeichers 22, Druckregelventile 15, 16, 17 sowie einen Druckmittelvorratsbehälter 18. Der Überwachung des im Zwischenraum 11 eingesteuerten Drucks dient ein Drucksensor 24, der ebenfalls im Druckbereitstellungsmodul 13 integriert sein kann. Der Hochdruckspeicher 22 liefert die Energie zur Bremsenbetätigung, wenn die Pumpe_ 23 aufgrund der Massenträgheit ihres Rotors die beispielsweise für eine plötzliche Vollbremsung notwendige Pumpleistung nicht sofort bereitstellen kann oder wenn keine elektrische Energie zum Antrieb der Pumpe 23 zur Verfügung steht. Dem Druckbereitstellungsmodul 13 ist eine elektronische Steuereinheit 25 zugeordnet, der u. a. Ausgangssignale des Drehwinkelsensors 37 sowie des Drucksensors 24 zugeführt werden und die der Ansteuerung der motorangetriebenen Pumpe 23 sowie der Druckregelventile 15 - 17 dient.

Außerdem ist in der hydraulischen Verbindung 12 zwischen dem Zwischenraum 11 und dem elektrohydraulischen Druckbereitstellungsmodul 13 eine hydraulisch betätigbare Ventilanordnung 10 eingefügt, die über eine hydraulische Steuerleitung 26 durch den in der vorhin genannten Kammer 9 eingesteuerten Druck steuerbar ist. Auf diesem Weg kann auch ohne Beteiligung elektronischer Komponenten eine Bremskraftverstärkung erfolgen.

Über die Verbindung 12 wird der Zwischenraum 11 mit Druck beaufschlagt, wodurch der zweite Kolben 4 im Hauptbremszylinder 1 betätigt und der dritte Kolben 5 an einen Anschlag 27 im Gehäuse 20 gedrückt wird, an dem der dritte Kolben 5 vor der Betätigung der Bremsanlage anlag. Der Anschlag 27 im Gehäuse 20 ist dabei nicht notwendigerweise, wie dargestellt, auf der trockenen Seite des dritten Kolbens 5 ausgebildet - ebenso gut kann er beispielsweise auch im druckmittelgefüllten Zwischenraum 11 angeordnet sein. Für die zur Druckregelung verwendeten elektrisch steuerbaren Ventile sind verschiedene Konfigurationen möglich. Beispielsweise könnte ein Schieberventil Verwendung finden. Eine bevorzugte Ventilkonfiguration ist die dargestellte, bei der drei separat ansteuerbare Sitzventile zur Anwendung kommen. Ein erstes Druckregelventil 15 steuert den Druckaufbau, ein zweites (16) den Druckabbau. Beide sind vorzugsweise stufenlos einstellbare Analogventile und in unbestromtem Zustand geschlossen. Ein drittes Ventil 17 stellt die für Ausdehnungsprozesse infolge von Temperaturänderungen notwendige Verbindung des Zwischenraums 11 mit einem Druckmittelvorratsbehälter 18 her. Zu diesem Zweck ist es vorzugsweise als Schaltventil ausgeführt und in unbestromtem Zustand offen. Elektrisch angeschlossen ist es vorzugsweise an eine Überwachungseinheit innerhalb der Elektronikeinheit 25 des Druckbereitstellungsmoduls. Wenn diese während einer Bremsung einen kritischen Fehler in einem Regelungsmodul der Elektronikeinheit 25 feststellt, schaltet es letztere ab und bringt so die Druckregelventile 15 und 16 in ihre geschlossene Position. Gleichzeitig wird das Schaltventil 17 bestromt und so die für diesen Fehlerfall vorgesehene Absperrung des Zwischenraums 11 sichergestellt. Auch bei einem Stromausfall, bei dem naturgemäß kein Elektromagnetventil mehr ansteuerbar ist, bleibt die Bremsanlage für den Fahrer beherrschbar, wie in den folgenden Ausführungen dargelegt: Die temperaturabhängige Volumenänderung des Druckmittels erfolgt vergleichsweise langsam, so dass der Öffnungsquerschnitt des Ventils 17 sehr klein gehalten werden kann. Durch diese Maßnahme ist gewährleistet, dass wenn im Falle eines Stromausfalls alle Ventile 15, 16, 17 die dargestellte unbestromte Schaltstellung annehmen, das im Zwischenraum 11 befindliche Druckmittel nur sehr langsam in den Druckmittelvorratsbehälter 18 entweichen kann. Ein plötzlicher, den Fahrer irritierender Pedalwegverlust wird so auch im Fall eines Stromausfalls ausgeschlossen.

Der vorhin erwähnte, im vierten Kolben 8 angeordnete Simulatorraum 21 ist Bestandteil einer hydraulischen Absperrvorrichtung zum Koppeln der Bewegungen des ersten (2) und des dritten (5) bzw. des vierten Kolbens 8, die in Abhängigkeit vom Verfahrweg des dritten Kolbens 5 im Gehäuse 20 aktiviert wird. Zu diesem Zweck ist zwischen dem Simulatorraum 21 und einem dem Hauptbremszylinder 1 zugeordneten Druckmittelvorratsbehälter 31 eine hydraulische Verbindung vorgesehen, die über einen Durchgang 32 im dritten Kolben 5 mit einem im vierten Kolben 8 ausgebildeten Abschnitt 33 verbunden ist, der in den Simulatorraum 21 mündet. Bei einer Bremspedalbetätigung verschiebt sich infolge einer geeigneten Befederung zunächst der vierte Kolben 8 im dritten Kolben 5. Dadurch wird der hydraulische Durchgang 35 geschlossen und in der hydraulischen Kammer 9 kann sich ein Druck aufbauen, der über die hydraulische Verbindung 26 zum Druckbereitstellungsmodul 13 übertragen wird und dieses veranlasst, im Zwischenraum 11 einen verstärkten Druck einzusteuern. So wird zum einen der Hauptbremszylinder 1 betätigt und zum anderen wird der dritte Kolben 5 an seinen gehäuseseitigen Anschlag 27 angedrückt, wodurch der hydraulische Durchgang 32 offen und der Pedalwegsimulator funktionsfähig bleibt. Bei ungenügendem oder fehlendem Verstärkerdruck im Zwischenraum 11 verschiebt sich der dritte Kolben 5 im Gehäuse 20, wodurch der hydraulische Durchgang 32 verschlossen und der Pedalwegsimulator abgeschaltet wird, indem die Bewegung des dritten Kolbens 5 hydraulisch an die Bewegung des ersten Kolbens 2 gekoppelt wird. Eine kleine Nachgiebigkeit in dieser Kopplung durch die über die Verbindung 26 in die Ventilanordnung 10 verdrängte geringe Menge an Hydraulikflüssigkeit wird dabei in Kauf genommen. Dabei können die in der Absperrvorrichtung enthaltenen hydraulischen Verbindungen als hydraulische Drosselelemente zur hydraulischen Bedämpfung des Pedalwegsimulators 7 dienen, wobei wenigstens eines der hydraulischen Drosselelemente ein durchströmungsrichtungsabhängiges Verhalten aufweisen kann.

In einem ersten (Normal-) Betriebsmodus, d.h. in einer Hydraulikverstärker-Betriebsart, wird durch Ansteuern des Druckaufbauventils 15 im Zwischenraum 11 ein Druck aufgebaut, durch dessen Wirkung der dritte Kolben 5 in der Zeichnung nach links geschoben wird, während der zweite Kolben 4 nach rechts gedrückt wird. Der erste Betriebsmodus wird im Diagramm gemäß Fig. 2 durch die Fläche "A" dargestellt. Zum elektronisch gesteuerten Druckabbau wird das Druckabbauventil 16 bestromt. Der Druck im Zwischenraum 11 wird so bemessen, dass er ausreicht, den dritten Kolben 5 gegen die über die Druckstange 28 übertragene Pedalkraft an seinem Anschlag 27 im Gehäuse 20 zu halten. Ansonsten ist der Druck im Zwischenraum 11 frei wählbar, so dass jede gewünschte Abhängigkeit des Bremsdrucks von der Bremspedalbetätigung programmiert werden kann. Unerwünschte Pedalrückwirkungen sind dabei ausgeschlossen. Diese elektronische Betätigungsdruckregelung hat den Vorteil, dass ihr Übertragungsverhalten im Rahmen der durch die technischen Daten von Druckspeicher, Druckaufbau- und Trennventil gegebenen Dynamik frei wählbar ist. Daher können eine sogenannte Springerfunktion, d.h. das Springen auf einen vorgegebenen Bremsdruckwert beim Antippen des Bremspedals 3, eine Bremsassistentenfunktion, eine Verzögerungsregelung und ein autonomes Bremsen, wie es beispielsweise für ASR (Antriebs-Schlupf Regelung), ESP (Elektronisches Stabilitätsprogramm) und ACC (Adaptive Cruise Control) benötigt wird, durch Softwaremaßnahmen realisiert werden. Hierfür wird die Fahrervorgabe in Form einer Bremspedalbetätigung, die durch Weg-, Kraft- oder sonstige Sensoren erfasst und von einer nicht explizit dargestellten Recheneinheit durch Anwendung geeigneter Algorithmen in Radbremsdrücke umgerechnet, die mit Hilfe der elektronisch schaltbaren Ventile im Druckbereitstellungsmodul und dem nachgeschalteten ABS-Regelmodul realisiert werden.

In einem zweiten Betriebsmodus, der im Diagramm gemäß Fig. 2 durch den Verlauf "B" dargestellt ist und der einer ersten Rückfallebene entspricht, wird zum Druckaufbau im Zwischenraum 11 der im Hochdruckspeicher 22 herrschende Restdruck verwendet. Der Druckaufbau wird dabei durch die vorhin erwähnte Regelventilanordnung 10 hydraulisch gesteuert, die mittels des in der Kammer 9 durch die Bewegung des vierten Kolbens 8 eingesteuerten Druckes betätigt wird.

In einem dritten Betriebsmodus, der durch das Fehlen eines vom hydraulischen Druckbereitstellungsmodul 13 erzeugten Druckes charakterisiert und in dem Diagramm gemäß Fig. 2 durch den Verlauf "C" dargestellt ist, kann die Bremsanlage rein mechanisch betätigt werden, der dritte Kolben 5 bewegt sich unter dem Einfluss einer Bremspedalbetätigung von seinem Anschlag 27 weg und verschiebt den zweiten Kolben 4 durch mechanischen Kontakt. Die Betätigung des Hauptbremszylinders 1 erfolgt ausschließlich mit Muskelkraft.

Durch die vorliegende Erfindung wird eine einfach aufgebaute Bremsanlage erreicht, bei der die Bremspedalcharakteristik nicht vom Betätigungszustand der restlichen Bremsanlage abhängt, wodurch das Pedalgefühl bei einer Fahrerbremsung weder durch das gleichzeitige Vorliegen einer Fremdbremsung noch durch andere Regelungsaktivitäten des Bremssystems wie Antiblockierregelung, Traktionskontrolle oder Fahrstabilitätsregelung gestört werden kann.

Die Bremsanlage hat weiterhin den Vorteil, dass sie einfacher aufgebaut ist als herkömmliche Bremsanlagen. Fahrzeuge mit einer elektronischen Stabilitätsregelfunktion (ESP) benötigen beispielsweise eine spezielle ESP-Hydraulik, die komplizierter ist als eine normale ABS-Hydraulik, da sie im Gegensatz zur ABS-Hydraulik auch die Fähigkeit zum Aufbau von Radbremsdrücken oberhalb des Hauptzylinderdrucks besitzen muss.

Bei Fahrzeugen mit der erfindungsgemäßen Bremsanlage ist eine spezielle ESP-Hydraulik überflüssig - die erfindungsgemäße Fremdbremshydraulik in Verbindung mit einem herkömmlichen ABS-System erbringt eine weit bessere Funktion. Es werden weniger elektromagnetisch betätigbare Ventile benötigt als für eine herkömmliche ESP-Hydraulik. Außerdem weist die erfindungsgemäße Bremsanlage eine bessere Energiebilanz und eine geringere Geräuschentwicklung auf, als eine herkömmliche ESP-Hydraulik, weil das dort im ESP-Betrieb erforderliche Umpumpen von Bremsflüssigkeit zum Erzeugen von Staudruck an einem Druckbegrenzungsventil entfällt. Auch im Vergleich zum angegebenen Stand der Technik kann eine Verbesserung des Geräuschverhaltens erzielt werden, da innerhalb des vom Gehäuse 8 umschlossenen Moduls, das im Fahrzeug mit der körperschallkritischen Spritzwand verbunden ist, keine geräuscherzeugenden Bauteile wie Ventile, Motoren oder Pumpen angeordnet sind.

Die gestellte Aufgabe einer Aufrechterhaltung der Bremskraftverstärkung bei einem kurzzeitigen Ausfall der elektrischen Energieversorgung ist dadurch gelöst, dass lediglich der Betriebsmodus A das Vorhandensein elektrischer Energie voraussetzt, wohingegen der Betriebsmodus B nur hydraulische Energie benötigt.

## Patentansprüche

1. Bremsanlage für Kraftfahrzeuge mit
• einem Hauptzylinder (1), an den Radbremszylinder anschließbar sind,
• einem ersten Kolben (2), der über eine Betätigungskräfte übertragende Druckstange (28) mit einem Bremspedal (3) gekoppelt ist,
• einem zweiten Kolben (4), über den der Hauptzylinder (1) betätigt wird,
• einem dritten Kolben (5), der vom ersten Kolben (2) betätigbar ist, und der in eine kraftübertragende Verbindung mit dem zweiten Kolben (4) bringbar ist,
• mit mindestens einem elastischen Element (6,7), das einen Pedalwegsimulator bildet, der in der Betriebsart "brake-by-wire" dem Fahrzeugführer ein angenehmes Pedalgefühl vermittelt,
• Mitteln zum Koppeln der Bewegungen des ersten und des dritten Kolbens, die in Abhängigkeit vom Verfahrweg des dritten Kolbens (5) in einem Gehäuse (20) aktiviert werden,
• mit einem mit hydraulischem Druck beaufschlagbaren Zwischenraum (11) zwischen dem zweiten (4) und dritten Kolben (5), wobei eine Druckbeaufschlagung des Zwischenraums (11) den zweiten und den dritten Kolben (4, 5) in eingegengesetzter Richtung belastet,
• sowie mit einem elektrisch steuerbaren Druckbereitstellungsmodul (13), das sowohl ein Befüllen des Zwischenraums (11) mit Druckmittel als auch dessen Entleeren ermöglicht, und
• mit einer elektronischen Steuereinheit (25), die der Ansteuerung des Druckbereitstellungsmoduls (13) dient,
**dadurch gekennzeichnet, dass** zwischen dem ersten (2) und dem dritten Kolben (5) ein vierter Kolben (8) angeordnet ist, der im Zusammenspiel mit dem dritten Kolben (5) eine hydraulische Kammer (9) begrenzt, die eine, durch eine Bremspedalbetätigung sperrbare, hydraulische Verbindung zu einem Druckmittelvorratsbehälter (31) aufweist und in der durch die Betätigungskräfte Druck aufgebaut werden kann, und dass durch den in der Kammer (9) eingesteuerten hydraulischen Druck eine Ventilanordnung (10) ansteuerbar ist, mit der der im Zwischenraum (11) eingesteuerte Druck veränderbar ist.

2. Bremsanlage nach Anspruch 1, **dadurch gekennzeichnet, dass** die Ventilanordnung (10) im Druckbereitstellungsmodul (13) integriert ist.

3. Bremsanlage nach Anspruch 1 oder 2, **dadurch gekennzeichnet, dass** das elastische Element (6) wirkungsmäßig zwischen der Druckstange (28) und dem vierten Kolben (8) angeordnet ist.

4. Bremsanlage nach einem der Ansprüche 1 bis 3, **dadurch gekennzeichnet, dass** eine hydraulische Absperrvorrichtung zum Koppeln der Bewegungen des ersten (2) und des dritten Kolbens (5) vorgesehen ist, die in Abhängigkeit vom Verfahrweg des dritten Kolbens (5) im Gehäuse (20) aktiviert wird.

5. Bremsanlage nach Anspruch 4, **dadurch gekennzeichnet, dass** die Absperrvorrichtung durch einen vom dritten Kolben (8) und ersten Kolben (2) begrenzten Simulatorraum (21) gebildet ist, der mit Druckmittel gefüllt ist und der im unaktivierten Zustand der Absperrvorrichtung mit einem Druckmittelvorratsbehälter (31) in Verbindung steht.

6. Bremsanlage nach Anspruch 5, **dadurch gekennzeichnet, dass** die hydraulische Kammer (9) mit dem Simulatorraum (21) mittels eines Durchgangs (35) verbunden ist, der durch eine Relativbewegung des vierten Kolbens (8) gegenüber dem dritten Kolben (5) absperrbar ist.

7. Bremsanlage nach Anspruch 5, **dadurch gekennzeichnet, dass** eine der hydraulischen Kammer (9) zugeordnete Dichtung bei unbetätigtem Bremspedal überströmbar und durch eine Relativverschiebung des vierten (8) im dritten Kolben (5) abdichtend ausgeführt ist.

8. Bremsanlage nach Anspruch 6, **dadurch gekennzeichnet, dass** der Durchgang (35) durch eine in der Stirnwand des vierten Kolbens (8) ausgebildete Öffnung gebildet ist, die mit einem am dritten Kolben (5) angeordneten Dichtelement (36) zusammen wirkt.

9. Bremsanlage nach wenigstens Anspruch 4 **dadurch gekennzeichnet, dass** die in der Absperrvorrichtung enthaltenen hydraulischen Verbindungen als hydraulische Drosselelemente der hydraulischen Bedämpfung des Pedalwegsimulators (7) dienen.

10. Bremsanlage nach Anspruch 9, **dadurch gekennzeichnet, dass** wenigstens eines der hydraulischen Drosselelemente ein durchströmungsrichtungsabhängiges Verhalten aufweist.

11. Bremsanlage nach einem der vorhergehenden Ansprüche, **dadurch gekennzeichnet, dass** ein Drehwinkelsensor (37) zum Erfassen von Bremspedalposition und -bewegung vorgesehen ist, dessen Ausgangssignal der elektronischen Steuereinheit (25) zugeführt wird und der Ansteuerung des Druckbereitstellungsmoduls (13) dient.

12. Bremsanlage nach einem der vorhergehenden Ansprüche, **dadurch gekennzeichnet, dass** ein Drucksensor (24) zum Erfassen des vom Druckbereitstellungsmodul (13) abgegebenen hydraulischen Druckes vorgesehen ist, dessen Ausgangssignal der elektronischen Steuereinheit (25) zugeführt wird.

13. Bremsanlage nach Anspruch 12, **dadurch gekennzeichnet, dass** das Druckbereitstellungsmodul (13) einen hydraulischen Hochdruckspeicher (22) enthält.

14. Bremsanlage nach einem der vorhergehenden Ansprüche, **dadurch gekennzeichnet, dass** das Druckbereitstellungsmodul (13) Mittel zum Laden des Hochdruckspeichers (22) enthält.

15. Bremsanlage nach einem der vorhergehenden Ansprüche 1 bis 14, **dadurch gekennzeichnet, dass** das Druckbereitstellungsmodul (13) elektrisch steuerbare Ventile (15, 16, 17) enthält.

16. Bremsanlage nach einem der vorhergehenden Ansprüche, **dadurch gekennzeichnet, dass** die elektronische Steuereinheit (25) dem Druckbereitstellungsmodul (13) zugeordnet ist.

17. Bremsanlage nach einem der vorhergehenden Ansprüche 1 bis 15, **dadurch gekennzeichnet, dass** die elektronische Steuereinheit (25) des Druckbereitstellungsmoduls (13) und eine elektronische Steuereinheit (30) eines dem Hauptzylinder (1) nachgeschalteten Radbremsdruckmodulationsmoduls (29) eine Baueinheit bilden bzw. zu einer gemeinsamen Steuereinheit zusammengefasst sind.

18. Bremsanlage nach Anspruch 17, **dadurch gekennzeichnet, dass** das Druckbereitstellungsmodul (13) und das Radbremsdruckmodulationsmodul (29) eine Baueinheit bilden.

## Claims

1. Brake system for motor vehicles, having
• a master cylinder (1) to which wheel brake cylinders can be connected,
• a first piston (2) which is coupled by means of a pressure rod (28), which transmits actuating forces, to a brake pedal (3),
• a second piston (4) by means of which the master cylinder (1) is actuated,
• a third piston (5) which can be actuated by the first piston (2) and which can be connected in a force-transmitting manner with the second piston (4),
• having at least one elastic element (6, 7) which forms a pedal travel simulator which imparts an acceptable pedal feel to the driver in the "brake by wire" operating mode,
• means for coupling the movements of the first and third pistons, which means are activated as a function of the movement travel of the third piston (5) in a housing (20),
• having an intermediate space (11), which can be acted on with hydraulic pressure, between the second piston (4) and third piston (5), with a pressurization of the intermediate space (11) loading the second and third pistons (4, 5) in opposite directions,
• and having an electrically controllable pressure generating module (13) which allows the intermediate chamber (11) to be both filled with pressure medium and also emptied of pressure medium, and
• having an electronic control unit (25) which serves to activate the pressure generating module (13),
**characterized in that** a fourth piston (8) is arranged between the first piston (2) and the third piston (5), which fourth piston (8) in interaction with the third piston (5) delimits a hydraulic chamber (9), which hydraulic chamber (9) has a hydraulic connection, which can be blocked by means of an actuation of the brake pedal, to a pressure medium reservoir (31) and in which hydraulic chamber (9) pressure can be built up by the actuating forces, and **in that** a valve arrangement (10) can be activated by the hydraulic pressure set in the chamber (9), by means of which valve arrangement (10) the pressure set in the intermediate space (11) can be varied.

2. Brake system according to Claim 1, **characterized in that** the valve arrangement (10) is integrated in the pressure generating module (13).

3. Brake system according to Claim 1 or 2, **characterized in that** the elastic element (6) is arranged so as to act between the pressure rod (28) and the fourth piston (8).

4. Brake system according to one of Claims 1 to 3, **characterized in that** a hydraulic shut-off device is provided for coupling the movements of the first piston (2) and of the third piston (5), which shut-off device is activated as a function of the movement travel of the third piston (5) in the housing (20) .

5. Brake system according to Claim 4, **characterized in that** the shut-off device is formed by a simulator space (21) which is delimited by the third piston (8) and the first piston (2) and which is filled with pressure medium and, in the deactivated state of the shut-off device, is connected to a pressure medium reservoir (31).

6. Brake system according to Claim 5, **characterized in that** the hydraulic chamber (9) is connected to the simulator space (21) by means of a passage (35) which can be shut off by means of a relative movement of the fourth piston (8) with respect to the third piston (5).

7. Brake system according to Claim 5, **characterized in that** flow can pass over a seal, which is assigned to the hydraulic chamber (9), when the brake pedal is not actuated, and said seal is designed so as to provide a sealing action in the event of a relative movement of the fourth piston (8) in the third piston (5).

8. Brake system according to Claim 6, **characterized in that** the passage (35) is formed by an opening which is formed in the end wall of the fourth piston (8) and which interacts with a sealing element (36) arranged on the third piston (5).

9. Brake system according to at least Claim 4, **characterized in that** the hydraulic connections which are provided in the shut-off device serve, as hydraulic throttle elements, to hydraulically dampen the pedal travel simulator (7).

10. Brake system according to Claim 9, **characterized in that** at least one of the hydraulic throttle elements has throughflow-direction-dependent characteristics.

11. Brake system according to one of the preceding claims, **characterized in that** a rotational angle sensor (37) is provided for measuring the brake pedal position and movement, the output signal of which rotational angle sensor (37) is supplied to the electronic control unit (25) and serves for activating the pressure generating module (13).

12. Brake system according to one of the preceding claims, **characterized in that** a pressure sensor (24) is provided for measuring the hydraulic pressure imparted by the pressure generating module (13), the output signal of which pressure sensor (24) is supplied to the electronic control unit (25).

13. Brake system according to Claim 12, **characterized in that** the pressure generating module (13) comprises a hydraulic high-pressure accumulator (22).

14. Brake system according to one of the preceding claims, **characterized in that** the pressure generating module (13) comprises means for charging the high-pressure accumulator (22).

15. Brake system according to one of the preceding Claims 1 to 14, **characterized in that** the pressure generating module (13) comprises electrically controllable valves (15, 16, 17).

16. Brake system according to one of the preceding claims, **characterized in that** the electronic control unit (25) is assigned to the pressure generating module (13).

17. Brake system according to one of the preceding Claims 1 to 15, **characterized in that** the electronic control unit (25) of the pressure generating module (13) and an electronic control unit (30) of a wheel brake pressure modulation module (29), which is positioned downstream of the master cylinder (1), form a structural unit or are combined to form a common control unit.

18. Brake system according to Claim 17, **characterized in that** the pressure generating module (13) and the wheel brake pressure modulation module (29) form a structural unit.

## Revendications

1. Installation de freinage pour véhicules automobiles, qui présente :
un cylindre principal (1) auquel des cylindres de freinage de roue peuvent être raccordés,
un premier piston (2) accouplé à une pédale de frein (3) par l'intermédiaire d'une tringle de poussée (28) qui transmet des forces d'actionnement,
un deuxième piston (4) par l'intermédiaire duquel le cylindre principal (1) est actionné,
un troisième piston (5) qui peut être actionné par le premier piston (2) et qui peut être amené à être relié au deuxième piston (4) pour lui transmettre une force,
au moins un élément élastique (6, 7) qui forme un simulateur de course de pédale qui, en mode de fonctionnement "brake-by-wire" (freinage à commande électrique) transmet au conducteur du véhicule une sensation agréable de pédale,
des moyens d'accouplement des déplacements du premier et du troisième piston qui sont activés en fonction du parcours de déplacement du troisième piston (5) dans un boîtier (20),
un espace intermédiaire (11) entre le quatrième piston (4) et le troisième piston (5), dans lequel une pression hydraulique peut être appliquée, l'application d'une pression dans l'espace intermédiaire (11) sollicitant le deuxième et le troisième piston (4, 5) dans des directions opposées,
ainsi qu'un module (13) de fourniture de pression commandé électriquement qui permet de remplir l'espace intermédiaire (11) de fluide sous pression et de l'en vider, et
une unité électronique de commande (25) qui sert à commander le module (13) de fourniture de pression,
**caractérisée en ce que**
un quatrième piston (8) est disposé entre le premier piston (2) et le troisième piston (5) et, en coopération avec le troisième piston (5), délimite une chambre hydraulique (9) qui présente une communication hydraulique, qui peut être bloquée par l'actionnement de la pédale de frein, avec un réservoir (31) de fluide sous pression et dans laquelle les forces d'actionnement permettent d'établir une pression et
**en ce que** la pression hydraulique appliquée dans la chambre (9) permet de commander un système de soupape (10) qui permet de modifier la pression appliquée dans l'espace intermédiaire (11).

2. Installation de freinage selon la revendication 1, **caractérisée en ce que** le système de soupape (10) est intégré dans le module (13) de fourniture de pression.

3. Installation de freinage selon les revendications 1 ou 2, **caractérisée en ce que** l'élément élastique (6) est disposé de manière à agir entre la tringle de poussée (28) et le quatrième piston (8).

4. Installation de freinage selon l'une des revendications 1 à 3, **caractérisée en ce qu'**elle présente un dispositif hydraulique de blocage qui couple les déplacements du premier piston (2) et du troisième piston (5) qui est activé en fonction du parcours de déplacement du troisième piston (5) dans le boîtier (20).

5. Installation de freinage selon la revendication 4, **caractérisée en ce que** le dispositif de blocage est formé par un espace de simulation (21) délimité par le troisième piston (8) et le premier piston (2), rempli de fluide sous pression et communiquant avec un réservoir (31) de fluide sous pression lorsque le dispositif de blocage est à l'état inactivé.

6. Installation de freinage selon la revendication 5, **caractérisée en ce que** la chambre hydraulique (9) est reliée à l'espace de simulation (21) au moyen d'un passage (35) qui peut être bloqué par un déplacement relatif entre le quatrième piston (8) et le troisième piston (5).

7. Installation de freinage selon la revendication 5, **caractérisée en ce qu'**un joint d'étanchéité associé à la chambre hydraulique (9) peut être traversé lorsque la pédale de frein n'est pas actionnée et assure l'étanchéité lors d'un déplacement relatif entre le quatrième piston (8) dans le troisième piston (5).

8. Installation de freinage selon la revendication 6, **caractérisée en ce que** le passage (35) est formé par une ouverture ménagée dans la paroi frontale du quatrième piston (8) et coopérant avec un élément d'étanchéité (36) disposé sur le troisième piston (5).

9. Installation de freinage selon au moins la revendication 4, **caractérisée en ce que** les liaisons hydrauliques prévues dans le dispositif de blocage servent d'éléments d'étranglement hydraulique qui amortissent hydrauliquement de simulateur (7) de parcours de pédale.

10. Installation de freinage selon la revendication 9, **caractérisée en ce que** le comportement d'au moins un des éléments d'étranglement hydrauliques dépend du sens dans lequel il est traversé.

11. Installation de freinage selon l'une des revendications précédentes, **caractérisée en ce qu'**elle présente un détecteur (37) d'angle de rotation qui détecte la position et le déplacement de la pédale de frein et dont le signal de sortie est amené à l'unité électronique de commande (25) et sert à commander le module (13) de fourniture de pression.

12. Installation de freinage selon l'une des revendications précédentes, **caractérisée en ce qu'**elle présente un détecteur de pression (24) qui détecte la pression hydraulique délivrée par le module (13) de fourniture de pression et dont le signal de sortie est amené à l'unité électronique de commande (25).

13. Installation de freinage selon la revendication 12, **caractérisée en ce que** le module (13) de fourniture de pression contient un réservoir hydraulique (22) sous haute pression.

14. Installation de freinage selon l'une des revendications précédentes, **caractérisé** ne ce que le module (13) de fourniture de pression contient des moyens de chargement du réservoir (22) à haute pression.

15. Installation de freinage selon l'une des revendications 1 à 14 qui précèdent, **caractérisée en ce que** le module (13) de fourniture de pression contient des soupapes (15, 16, 17) commandées électriquement.

16. Installation de freinage selon l'une des revendications précédentes, **caractérisée en ce que** l'unité électronique de commande (25) est associée au module (13) de fourniture de pression.

17. Installation de freinage selon l'une des revendications 1 à 15 qui précèdent, **caractérisée en ce que** l'unité électronique de commande (25) du module (13) de fourniture de pression et une unité électronique de commande (30) d'un module (29) de modulation de la pression sur les freins de roue raccordé en aval du cylindre principal (1) forment une entité ou sont rassemblées en une unité commune de commande.

18. Installation de freinage selon la revendication 17, **caractérisée en ce que** le module (13) de fourniture de pression et le module (29) de modulation de la pression sur les freins de roue forment une entité.
